# EUROPÄISCHE PATENTSCHRIFT

(11) **EP 1 279 766 B1**
(45) Veröffentlichungstag und Bekanntmachung des Hinweises auf die Patenterteilung: **11.10.2006**
(21) Anmeldenummer: 02009967.7
(22) Anmeldetag: 03.05.2002
(51) Int. Cl.: D21G 1/02, F16C 13/00

(54) **Durchbiegungseinstellwalze**
Controlled deflection roll
Rouleau à courbure réglable

(30) Priorität: 25.07.2001 DE 10136270
(43) Veröffentlichungstag der Anmeldung: 29.01.2003
(60) Teilanmeldung: 05018941.4
(73) Patentinhaber: Voith Patent GmbH, 89522 Heidenheim (DE)
(72) Erfinder: van Haag, Rolf, Dr., 47647 Kerken (DE)
(74) Vertreter: Manitz, Finsterwald & Partner GbR

(56) Entgegenhaltungen:
- US-A- 4 282 638
- US-A- 4 282 639
- US-A- 5 033 176
- US-A- 5 101 544

## Beschreibung

Die Erfindung betrifft eine Durchbiegungseinstellwalze mit einem umlaufenden Walzenmantel, einem den Walzenmantel axial durchsetzenden drehfesten Joch, mehreren in Richtung der Walzenachse hintereinander am Joch angeordneten hydrostatischen Stützelementen, die jeweils durch eine druckfluidbetätigte Zylinder/Kolben-Einheit gebildet sind, auf ihrer der Innenseite des Walzenmantels zugewandten Seite einen Hydrostatiktaschen bereich aufweisen und auf die Innenseite des Walzenmantels eine Stützkraft ausüben, und einer Einrichtung zur Beeinflussung der Walzentemperatur über wenigstens einen von der Druckfluidbeaufschlagung der Stützelemente getrennten Fluidstrom, wobei die Stützelemente einzeln und/oder gruppenweise ansteuerbar sind, wodurch sich entsprechende, in Richtung der Walzenachse aufeinanderfolgende Walzenzonen ergeben, und wobei eine jeweilige lokale Beaufschlagung der verschiedenen Walzenzonen durch die Temperaturbeeinflussungseinrichtung in Abhängigkeit vom Kolbendruck des Stützelements bzw. der Stützelementgruppe der jeweiligen Walzenzone erfolgt.

In Durchbiegungseinstell- oder Durchbiegungsausgleichswalzen kommen Stützquellen oder Stützelemente zum Einsatz, die durch eine Versorgungsleitung mit Öldruck beaufschlagt werden. Durch diesen Öldruck wird die jeweilige Stützquelle gegen den rotierenden Walzenmantel gepreßt. Da die Kolbenfläche der Stützquelle kleiner ist als die zum Walzenmantel weisende Hydrostatiktaschenfläche, stellt sich ein geringerer Taschenöldruck ein. Die Druckdifferenz zwischen Kolbendruck und Taschendruck bestimmt den Volumenstrom, der über die zwischen die Taschenfläche und die Kolbenfläche geschalteten Kapillaren fließt. Somit stellt sich der jeweilige Volumenstrom an einer Stützquelle in Abhängigkeit vom Kolbendruck ein.

Zur individuellen Profilkorrektur, d.h. insbesondere zur Korrektur bestimmter Eigenschaftsquerprofile, der durch den Walzenspalt laufenden Warenbahn, insbesondere Papier- oder Kartonbahn, werden die Stützquellen einzeln mit einem Öldruck beaufschlagt. Die Höhe der Öldrücke wird über eine online-Profildickenmessung der Warenbahn geregelt.

In Abhängigkeit von den jeweils erforderlichen Profilkorrekturen kann es zu großen Differenzen zwischen den Öldrücken der verschiedenen Stützquellen kommen (z.B. von 3,5 bis 90 bar von Stützquelle zu Stützquelle). Dies führt, wie bereits angedeutet, zu Volumenstromdifferenzen an den Stützquellen. Zwischen dem rotierenden Walzenmantel und den Stützquellen entsteht durch die Ölscherung in Abhängigkeit von der Mantelgeschwindigkeit und der Ölspalthöhe, die wieder vom Volumenstrom, der Öltemperatur und dem Taschendruck abhängig ist, Reibung. Infolge der großen Druckunterschiede ergibt sich somit von einer Stützquelle zur anderen eine unterschiedlich hohe Reibleistung, die sich in Temperaturdifferenzen am Walzenmantel auswirkt. Diese Temperaturdifferenzen wirken sich wieder auf die Form des Walzenmantels aus und bringen somit einen das erzeugte Streckenlastprofil der Durchbiegungseinstellwalze beeinflussende Rückkopplungseffekt mit sich.

Da sich bei einer Druckentlastung an einer Stützquelle ein geringerer Volumenstrom einstellt, ergibt sich an dieser Stützquelle trotz einer betragsmäßig geringeren Reibleistung als bei höheren Drücken eine höhere Temperatur. Eine höhere Temperatur führt nun aber zu einer Ausdehnung des Walzenmantels, die sich in einer Streckenlasterhöhung im Walzenspalt auswirkt. Die Temperaturentwicklung wirkt sich also gegenläufig zur gewünschten Druckentlastung aus und ist somit unerwünscht. In Einzelfällen kann dies sogar zu einer Instabilität im Regelverhalten führen.

Üblicherweise wird die Temperaturentwicklung an den Stützquellen durch einen separaten Kühlölström begrenzt, der in den Innenraum der Walze geleitet wird. Hierzu wird ein Volumenstrom geringer Temperatur, dessen Menge über die Rücklauftemperatur der Walze geregelt wird, über Düsen im Walzeninnenraum verteilt. Bisher wird mit einer solchen Verteilung jeder Stützquelle die gleiche Menge Kühlöl zugeführt. Infolge der zuvor genannten Volumenstromdifferenzen stellen sich nun aber trotz der zugeführten Kühlölmenge unterschiedliche Temperaturen an den Stützquellen ein. Dieser Sachverhalt wird durch das folgende Berechnungsbeispiel belegt:

Bei dem vorliegenden Berechnungsbeispiel handelt es sich um eine Biegeausgleichswalze eines Glättwerks, wobei die Produktionsgeschwindigkeit 1540 m/min beträgt. Die Oberflächentemperatur der Walze ist in diesem Fall gleich der Rücklauftemperatur, so daß kein Wärmestrom durch den Mantel fließt.

Die für die Berechnung relevanten technischen Daten sind wie folgt:
- Außendurchmesser:: 1016 mm
- Innendurchmesser:: 780 mm
- Stützquellengröße:: 70 mm Kolbendurchmesser
- Ölviskosität:: ISO VG 68 (Mineralöl)
- Zulauftemperatur:: 40°C für alle Ströme (Stützquelle und Kühlöl)

In der Berechnung wurden die Temperaturentwicklung und die Reibleistung einer Stützquelle für einen minimal (3,5 bar) und maximal (90 bar) möglichen Kolbendruck in Abhängigkeit vom Kühlstrom untersucht.

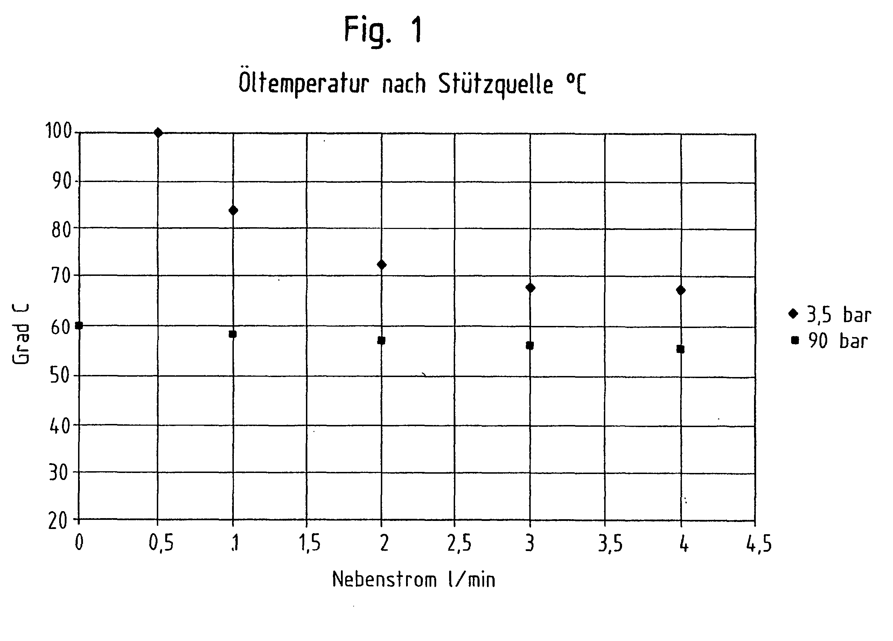

Figur 1 zeigt ein Diagramm, in dem für den minimalen und den maximalen Kolbendruck 3,5 bar bzw. 90 bar jeweils die sich nach einer Stützquelle ergebende Öltemperatur über dem Nebenstrom, d.h. Kühlstrom, dargestellt ist. Dabei ist die Temperatur in °C und der Nebenstrom in l/min angegeben. Die dargestellte Öltemperatur wurde unmittelbar im Auslauf in Manteldrehrichtung hinter der Stützquelle ermittelt.

Im Einlauf der Stützquelle wird Öl mit einer Mischtemperatur, die sich durch das Zuspritzen des Kühlöls im Walzeninneren ergibt, mit dem Walzenmantel mitlaufend unter die Stützquelle eingezogen.

Anhand der Figur 1 ist zu erkennen, daß die Öltemperaturen bei einem Kolbendruck von 3,5 bar für alle untersuchten Kühlölströme deutlich höher liegen als bei einem Kolbendruck von 90 bar.

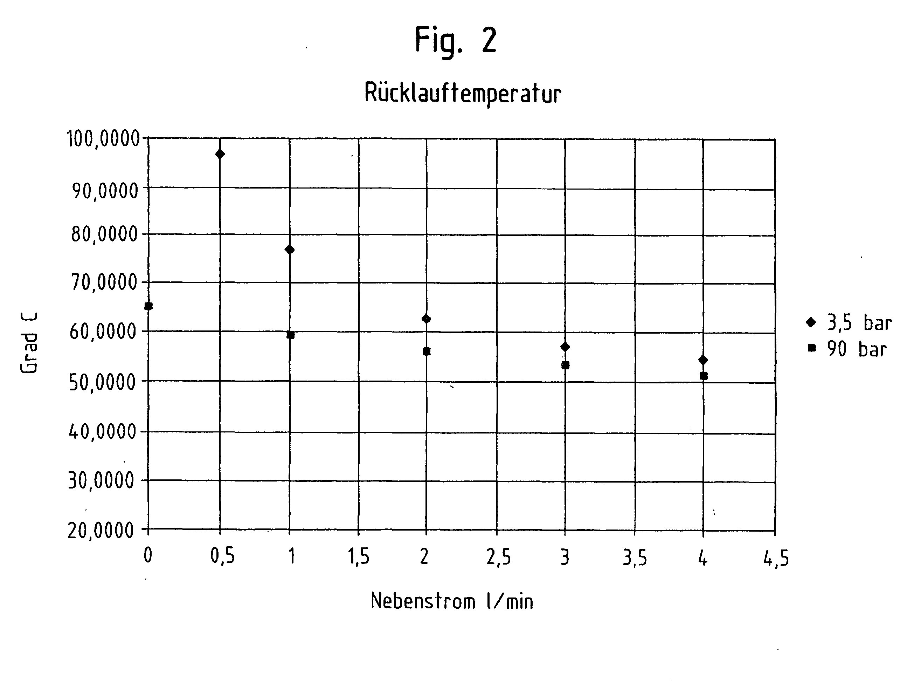

Die sich einstellende Mischtemperatur im Walzeninneren entspricht in etwa der örtlichen Rücklauftemperatur. Figur 2 zeigt ein Diagramm, in dem für die beiden verschiedenen Kolbendrücke jeweils die berechnete Rücklauftemperatur über dem Kühlstrom (Nebenstrom) aufgetragen ist. Hierbei ist zu beachten, daß in der Berechnung jeweils nur eine Stützquelle untersucht wurde, d.h. eine Vermischung des Öls aus mehreren Stützquellen mit unterschiedlichen Öldrücken und damit unterschiedlichen Temperaturen unberücksichtigt bleibt.

Die sich einstellenden örtlichen Rücklauftemperaturen zeigen mit kleiner werdenden Kühlölströmen eine steigende Temperaturdifferenz zwischen einer hoch belasteten und einer niedrig belasteten Stützquelle. Eine solche Temperaturdifferenz wirkt sich nun aber maßgeblich auf die Form des rotierenden Walzenmantels aus.

Eine Durchbiegungseinstellwalze der eingangs genannten Art ist in der US-A-5 101 544 beschrieben. Bei dieser bekannten Durchbiegungseinstellwalze wird das von der Temperaturbeeinflussungseinrichtung gelieferte Fluid den Hydrostatiktaschen der Stützelemente zugeführt, die über Drosselbohrungen oder Kapillaren mit Druckfluid aus den Druckräumen versorgt werden. Dabei wird das Fluid der Temperaturbeeinflussungseinrichtung den Hydrostatiktaschen über einen innerhalb des jeweiligen Stützelements verlaufenden Kanal zugeführt, mit dem die Hydrostatiktaschen wieder über Drosselbohrungen in Verbindung stehen.

Bei einer aus der US-A-5 033 176 bekannten Durchbiegungseinstellwalze wird die Gesamtmenge des einem jeweiligen Stützelement zugeführten Druckfluids und Temperaturausgleichsfluids konstant gehalten, um für einen entsprechenden Temperaturausgleich zu sorgen. Auch bei dieser Durchbiegungseinstellwalze wird das Fluid der Temperaturbeeinflussungseinrichtung der Mantelinnenseite wieder über das jeweilige Stützelement zugeführt. Im vorliegenden Fall gelangt dieses der Temperaturbeeinflussung dienende Fluid über zwei innerhalb des Stützelements vorgesehene Zuführbohrungen in zwei getrennte Verteilungskammern, von denen in Mantelumlaufrichtung betrachtet eine am einlaufseitigen Ende und die andere am auslaufseitigen Ende des Stützelements vorgesehen ist. Im Fall eines kreisförmigen Umrisses der der Mantelinnenfläche zugewandten Stützfläche des Stützelements können die beiden getrennten Verteilungskammern jeweils einen halbkreisförmigen Verlauf besitzen.

In der US-A-4 282 639 ist eine Durchbiegungseinstellwalze beschrieben, die mit über die Walzenzonen verteilten, der Mantelinnenwand benachbarten Heizelementen versehen ist, denen jeweils eine von der Temperatur des Walzenmantels in der betreffenden Walzenzone abhängige Fluidmenge zugeführt wird. Die Heizelemente sind in Walzenumlaufrichtung betrachtet gegenüber den Stützelementen versetzt angeordnet.

Ziel der Erfindung ist es, eine verbesserte Durchbiegungseinstellwalze der eingangs genannten Art zu schaffen, bei der die zuvor genannten Probleme beseitigt sind.

Diese Aufgabe wird nach der Erfindung dadurch gelöst, daß das durch die Temperaturbeeinflussungseinrichtung gelieferte Fluid einem den Taschenbereich des jeweiligen hydrostatischen Stützelements umschließenden Ringraum zugeführt ist.

Bevorzugt sind zudem mittels der Temperaturbeeinflussungseinrichtung die zwischen dem Walzenmantel und dem Joch vorgesehenen Ringräume der verschiedenen Walzenzonen jeweils in einem in Walzenumlaufrichtung betrachtet außerhalb des betreffenden Stützelements bzw. Stützelementgruppe liegenden Bereich mit dem betreffenden Fluid beaufschlagbar.

Aufgrund dieser Ausbildung ist nicht nur eine optimale Temperaturvergleichmäßigung möglich, es wird auch der zur Beeinflussung der Walzentemperatur erforderliche Fluidstrom reduziert.

Die Verwendung eines den Taschenbereich des jeweiligen hydrostatischen Stützelements umschließenden Ringraumes für das durch die Temperaturbeeinflussungseinrichtung gelieferte Fluid bringt den Vorteil mit sich, dass das der Temperaturbeeinflussung dienende Fluid unabhängig von der Walzendrehrichtung über eine Versorgungsleitung zugeführt werden kann.

Bei einer bevorzugten Ausführungsform der erfindungsgemäßen Durchbiegungseinstellwalze ist mittels der Temperaturbeeinflussungseinrichtung zumindest ein Teil der Walzenzonen jeweils mit einem Kühlfluid, insbesondere einem Kühlöl, beaufschlagbar.

Grundsätzlich ist jedoch auch eine solche Ausführung denkbar, bei der mittels der Temperaturbeeinflussungseinrichtung zumindest ein Teil der Walzenzonen jeweils mit einem Heizfluid beaufschlagbar ist, wobei auch in diesem Fall vorzugsweise wieder Öl verwendet wird.

Bei einer zweckmäßigen praktischen Ausführungsform der erfindungsgemäßen Durchbiegungseinstellwalze ist die mittels der Temperaturbeeinflussungseinrichtung lokal einer jeweiligen Walzenzone zugeordnete Fluidmenge in Abhängigkeit vom Kolbendruck des betreffenden Stützelements bzw. der betreffenden Stützelementgruppe variierbar.

Die Temperaturbeeinflussungseinrichtung kann insbesondere Düsen umfassen, über die das betreffende Fluid in die jeweiligen Walzenzonen einspritzbar ist. Dabei ist den Düsen vorzugsweise jeweils ein Ventil vorgeschaltet, über das die jeweilige Fluidmenge in Abhängigkeit vom jeweiligen Kolbendruck steuerbar ist. Das Ventil kann insbesondere so ausgeführt sein, daß es mit zunehmend höher werdenden Kolbendrücken zunehmend schließt und umgekehrt.

Bei einer zweckmäßigen praktischen Ausführungsform der erfindungsgemäßen Durchbiegungseinstellwalze, bei der insbesondere Kühlfluid verwendet wird, ist das Ventil so ausgeführt und/oder ansteuerbar, daß es bei Kolbendrücken oberhalb eines vorgebbaren oberen Grenzwertes zumindest im wesentlichen ganz geschlossen und/oder bei Kolbendrücken unterhalb einem vorgebbaren unteren Grenzwert zumindest im wesentlichen ganz geöffnet ist.

Eine zweckmäßige praktische Ausführungsform zeichnet sich dadurch aus, daß der Ventilquerschnitt über einen federbelasteten Ventilkörper variierbar ist, der entgegen der Federkraft durch den Kolbendruck beaufschlagbar ist.

Durch eine der Stützquellengröße angepaßte Auslegung des Düsenquerschnitts kann so insbesondere eine konstante Mischtemperatur im Walzeninnern erzeugt werden.

Für den eingangs angeführten Fall bedeutet dies, daß beispielsweise schon 1,7 l/min Kühlöl für eine Stützquelle mit 3,5 bar Kolbendruck ausreichend ist, um auf die gleiche Rücklauftemperatur einer Stützquelle mit 90 bar ohne Kühlöl zu kommen. Ohne eine solche Volumenstromsteuerung müßte eine wesentlich höhere Kühlölmenge zugeführt werden, um die gleiche Mischtemperatur zu erhalten. Es ist auch nicht mehr erforderlich, wie beim zuvor geschilderten Fall die Rücklauftemperatur aller Stützquellen unnötig tief zu senken, so daß überdies die Antriebsleistung der Walze gering gehalten werden kann. Eine alternative Anhebung der Zulauftemperaturen zur Vermeidung dieses Problems würde den Gesamtvolumenstrom der Walze weiter erhöhen.

Die erfindungsgemäße Lösung bringt somit neben dem Vorteil einer Temperaturvergleichmäßigung noch den Vorteil einer Reduzierung des erforderlichen Kühlfluidstroms mit sich.

Eine alternative vorteilhafte Ausführungsform der erfindungsgemäßen Durchbiegungseinstellwalze zeichnet sich dadurch aus, daß eine variable, in Abhängigkeit vom Kolbendruck des betreffenden Stützelements bzw. der betreffenden Stützelementgruppe gesteuerte Lenkung eines mittels der Temperaturbeeinflussungseinrichtung lokal einer jeweiligen Walzenzone zugeführten Fluidvolumenstroms vorgesehen ist. Dabei kann die Lenkung des Fluidvolumenstroms insbesondere durch den Kolbendruck selbst gesteuert sein. Die Lenkung des Fluidvolumenstroms kann beispielsweise über variable Bleche erfolgen.

Wie bereits erwähnt, bringt ein den Taschenbereich des jeweiligen hydrostatischen Stützelements umschließender Ringraum für das durch die Temperaturbeeinflussungseinrichtung gelieferte Fluid den Vorteil mit sich, daß das der Temperaturbeeinflussung dienende Fluid unabhängig von der Walzendrehrichtung über eine Versorgungsleitung zugeführt werden kann. Um den Druck im den Taschenbereich eines jeweiligen hydrostatischen Stützelements umschließenden Ringraum oder -kanal und die Reibung möglichst gering zu halten, ist die Breite des den Ringraum nach außen begrenzenden Steges vorzugsweise deutlich kleiner als die Breite des zwischen diesem Ringraum und dem Taschenbereich vorgesehenen Steges. Damit ergibt sich der weitere Vorteil, daß auch bei vollständig leer geschöpfter Walze im Einlauf der Stützquelle genügend Fluid ansteht, das bei hoher Geschwindigkeit unter die Stützquelle eingeschleppt wird.

Die Erfindung wird im folgenden anhand eines Ausführungsbeispiels unter Bezugnahme auf die Zeichnung näher erläutert; in dieser zeigen:
- Figur 1: ein Diagramm, in dem für zwei verschiedene Kolbendrücke jeweils die sich nach einer Stützquelle ergebende Öltemperatur über dem Kühlölstrom (Nebenstrom) dargestellt ist,
- Figur 2: ein Diagram, in dem für zwei verschiedene Kolbendrükke jeweils die berechnete Rücklauftemperatur über dem Kühlölstrom (Nebenstrom) dargestellt ist,
- Figur 3: eine schematische geschnittene Teildarstellung einer Durchbiegungseinstellwalze, die lediglich dem besseren Verständnis der Erfindung dient, als solche jedoch nicht zur Erfindung gehört,
- Figur 4: eine schematische geschnittene Teildarstellung einer Ausführungsform einer erfindungsgemäßen Durchbiegungseinstellwalze und
- Figur 5: eine schematische Draufsicht des in der Figur 4 gezeigten Stützelements.

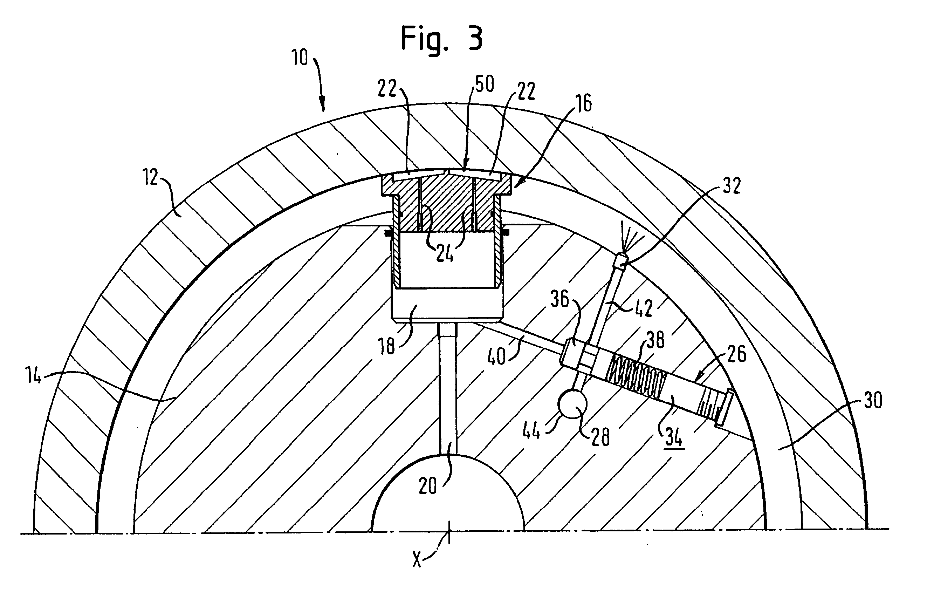

Figur 3 zeigt in schematischer geschnittener Teildarstellung eine Durchbiegungseinstellwalze 10, die zur Behandlung einer Materialbahn wie insbesondere einer Papier- oder Kartonbahn in einem mit einer Gegenfläche gebildeten Spalt (nicht gezeigt) dienen kann.

Die Durchbiegungseinstellwalze 10 umfaßt einen umlaufenden Walzenmantel 12, ein den Walzenmantel 12 axial durchsetzendes drehfestes Joch 14 und mehrere in Richtung der Walzenachse X hintereinander am Joch 14 angeordnete hydrostatische Stützelemente 16, von denen in der Figur 3 lediglich eines zu erkennen ist.

Die Stützelemente 16 sind jeweils durch eine druckfluidbetätigte Zylinder/Kolben-Einheit gebildet, die auf die Innenseite des Walzenmantels 12 eine jeweilige Stützkraft auszuübt.

Die Stützelemente 16 können einzeln und/oder gruppenweise ansteuerbar sein, wodurch sich entsprechende, in Richtung der Walzenachse X aufeinanderfolgende Walzenzonen ergeben.

Der Druckraum 18 eines jeweiligen Stützelements 16 ist über einen im Joch 14 vorgesehenen Kanal 20 mit Druckfluid beaufschlagbar. Die mantelseitigen Hydrostatiktaschen 22 werden jeweils über wenigstens eine Drossel oder Kapillare 24 mit Druckfluid versorgt. Dabei sind diese Drosseln 24 im vorliegenden Fall zwischen die Hydrostatiktaschen 22 und den Druckraum 18 geschaltet.

Im vorliegenden Fall besitzt ein jeweiliges Stützelement 16 beispielsweise jeweils vier Hydrostatiktaschen 22.

Die Durchbiegungseinstellwalze 10 umfaßt überdies eine Einrichtung 26 zur Beeinflussung der Walzentemperatur über wenigstens einen von der Druckbeaufschlagung der Stützelemente 16 getrennten Fluidstrom 28, bei dem es sich im vorliegenden Fall um einen Kühlfluidstrom handelt.

Eine jeweilige lokale Beaufschlagung der verschiedenen Walzenzonen durch die Temperaturbeeinflussungseinrichtung 26 erfolgt in Abhängigkeit vom Kolbendruck des Stützelements 16 der jeweiligen Walzenzone. Im vorliegenden Fall ist die mittels der Temperaturbeeinflussungseinrichtung 26 lokal einer jeweiligen Walzenzone zugeführte Fluidmenge in Abhängigkeit vom Kolbendruck des betreffenden Stützelements 16 variierbar.

Wie anhand der Figur 3 zu erkennen ist, sind mittels der Temperaturbeeinflussungseinrichtung 26 die zwischen dem Walzenmantel 12 und dem Joch 14 vorgesehenen Ringräume 30 der verschiedenen Walzenzonen mit dem Kühlfluid, hier Kühlöl, beaufschlagbar. Die Temperaturbeeinflussungseinrichtung 26 umfaßt im vorliegenden Fall Düsen 32, über die das Kühlfluid in die jeweiligen Walzenzonen bzw. Ringräume 30 einspritzbar ist.

Dabei ist den Düsen 32 jeweils ein Ventil 34 vorgeschaltet, über das die jeweilige Fluidmenge in Abhängigkeit vom jeweiligen Kolbendruck steuerbar ist. Das Ventil 34 ist zweckmäßigerweise so ausgeführt, daß es mit zunehmend höher werdenden Kolbendrücken zunehmend schließt und umgekehrt.

Das Ventil 34 kann insbesondere so ausgeführt und/oder ansteuerbar sein, daß es bei Kolbendrücken oberhalb eines vorgebbaren oberen Grenzwertes zumindest im wesentlichen ganz geschlossen und/oder bei Kolbendrücken unterhalb einem vorgebbaren unteren Grenzwert zumindest im wesentlichen ganz geöffnet ist.

Wie anhand der Figur 3 zu erkennen ist, ist im vorliegenden Fall der Ventilquerschnitt über einen federbelasteten Ventilkörper 36 variierbar, der entgegen der Kraft einer Feder 38 durch den Kolbendruck, d.h. den Druck im Druckraum 18, beaufschlagbar ist. Dazu ist das jeweilige Ventil 34 über einen Kanal 40 mit dem Druckraum 18 verbunden. Das jeweilige Ventil 34 kann ebenso wie der Kanal 40 im Joch 14 ausgebildet sein. Die der Kühlölverteilung dienende Düse 32 ist über einen Kanal 42 mit einer den Fluidstrom 28 führenden Leitung 44 innerhalb des Jochs 14 verbunden. Wie anhand der Figur 3 zu erkennen ist, ist das Ventil 34 in den Kanal 42 eingeschaltet. Mit zunehmendem Kolbendruck wird der Ventilkörper 36 nach rechts verschoben, wodurch sich der Ventilquerschnitt verringert. Mit abnehmendem Kolbendruck wird der Ventilkörper 36 durch die Feder wieder nach links bewegt, wodurch der Ventilquerschnitt entsprechend vergrößert wird.

Im vorliegenden Fall wird also jeder Düse 32, die in den Ringraum 30 eines jeweiligen Stützelements 16 Öl spritzt, ein Ventil 34 vorgeschaltet, das in Abhängigkeit vom in dem Druckraum 18 vorherrschenden Kolbendruck die zugeführte Kühlölmenge steuert. Die Auslegung des Ventils 34 kann so erfolgen, daß bei hohen Drücken der Kühlölstrom auf Null zurückgefahren wird und bei minimalen Kolbendrücken der Ventilquerschnitt vollständig geöffnet wird. Durch eine der Stützelementgröße angepaßte Auslegung des Düsenquerschnitts kann so eine konstante Mischtemperatur im Walzeninnern erzeugt werden.

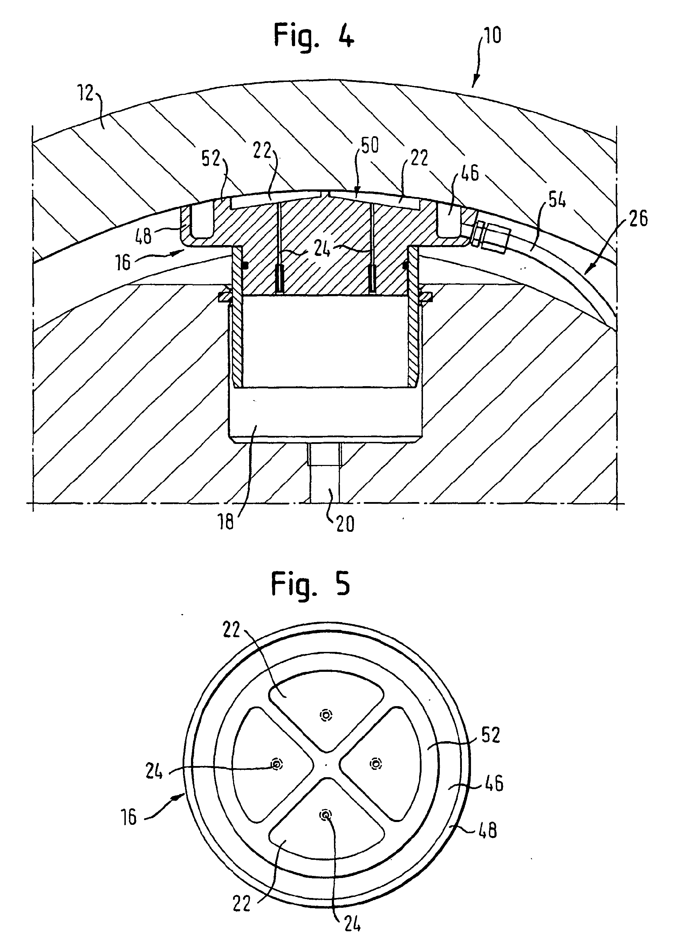

Die Figuren 4 und 5, in denen eine beispielhalfte Ausführungsform der Erfindung wiedergegeben ist, zeigen eine abgewandelte Ausführungsform der Durchbiegungseinstellwalze 10, bei der das durch die Temperaturbeeinflussungseinrichtung 26 gelieferte Fluid einem den Taschenbereich 50 des jeweiligen hydrostatischen Stützelements 16 umschließenden Ringraum 46 zugeführt ist. Wie anhand der Figuren 4 und 5 zu erkennen ist, ist dabei die Breite des den Ringraum 46 nach außen begrenzenden Steges 48 deutlich kleiner als die Breite des zwischen diesem Ringraum 46 und dem Taschenbereich 50 vorgesehenen Steges 52.

Die vorliegende Ausführungsform bringt den Vorteil mit sich, daß das Kühlöl unabhängig von der Walzendrehrichtung über eine Versorgungsleitung 54 zugeführt werden kann. Nachdem der äußere Steg 48 wesentlich schmaler ist als der innere Steg, können der Druck im Ringkanal 46 und die Reibung gering gehalten werden. Ein weiterer Vorteil dieser Ausführungsform besteht darin, daß auch bei vollständig leer geschöpfter Walze im Einlauf des Stützelements 16 genügend Kühlöl ansteht, das bei hoher Geschwindigkeit unter das Stützelement 16 eingeschleppt werden kann.

### Bezugszeichenliste

- 10: Durchbiegungseinstellwalze
- 12: Walzenmantel
- 14: Joch
- 16: Stützelement
- 18: Druckraum
- 20: Kanal
- 22: Hydrostatiktasche
- 24: Drossel, Kapillare
- 26: Temperaturbeeinflussungseinrichtung
- 28: Fluidstrom
- 30: Ringraum
- 32: Düse
- 34: Ventil
- 36: Ventilkörper
- 38: Feder
- 40: Kanal
- 42: Kanal
- 44: Leitung
- 46: Ringraum
- 48: Steg
- 50: Taschenbereich
- 52: Steg
- 54: Versorgungsleitung

- X: Walzenachse

## Patentansprüche

1. Durchbiegungseinstellwalze (10) mit einem umlaufenden Walzenmantel (12), einem den Walzenmantel (12) axial durchsetzenden drehfesten Joch (14), mehreren in Richtung der Walzenachse (X) hintereinander am Joch angeordneten hydrostatischen Stützelementen (16), die jeweils durch eine druckfluidbetätigte Zylinder/Kolben-Einheit gebildet sind, auf ihrer der Innenseite des Walzenmantels (12) zugewandten Seite einen Hydrostatiktaschenbereich aufweisen und auf die Innenseite des Walzenmantels (12) eine Stützkraft ausüben, und einer Einrichtung (26) zur Beeinflussung der Walzentemperatur über wenigstens einen von der Druckfluidbeaufschlagung der Stützelemente (16) getrennten Fluidstrom (28), wobei die Stützelemente (16) einzeln und/oder gruppenweise ansteuerbar sind, wodurch sich entsprechende, in Richtung der Walzenachse aufeinanderfolgende Walzenzonen ergeben, und wobei eine jeweilige lokale Beaufschlagung der verschiedenen Walzenzonen durch die Temperaturbeeinflussungseinrichtung (26) in Abhängigkeit vom Kolbendruck des Stützelements (16) bzw. der Stützelementgruppe der jeweiligen Walzenzone erfolgt,
**dadurch gekennzeichnet,**
**dass** das durch die Temperaturbeeinflussungseinrichtung (26) gelieferte Fluid einem den Taschenbereich des jeweiligen hydrostatischen Stützelements umschließenden Ringraum (46) zugeführt ist.

2. Durchbiegungseinstellwalze nach Anspruch 1,
**dadurch gekennzeichnet,**
**dass** mittels der Temperaturbeeinflussungseinrichtung (26) die zwischen dem Walzenmantel (12) und dem Joch (14) vorgesehenen Ringräume (30) der verschiedenen Walzenzonen jeweils in einem in Walzenumlaufrichtung betrachtet außerhalb des betreffenden Stützelements (16) bzw. der betreffenden Stützelementgruppe liegenden Bereich mit dem betreffenden Fluid beaufschlagbar sind

3. Durchbiegungseinstellwalze nach Anspruch 1 oder 2,
**dadurch gekennzeichnet,**
**dass** mittels der Temperaturbeeinflussungseinrichtung (26) zumindest ein Teil der Walzenzonen jeweils mit einem Kühlfluid beaufschlagbar ist.

4. Durchbiegungseinstellwalze nach einem der vorhergehenden Ansprüche,
**dadurch gekennzeichnet,**
**dass** mittels der Temperaturbeeinflussungseinrichtung (26) zumindest ein Teil der Walzenzonen jeweils mit einem Heizfluid beaufschlagbar ist.

5. Durchbiegungseinstellwalze nach einem der vorhergehenden Ansprüche,
**dadurch gekennzeichnet,**
**dass** die mittels der Temperaturbeeinflussungseinrichtung (26) lokal einer jeweiligen Walzenzone zugeführte Fluidmenge in Abhängigkeit vom Kolbendruck des betreffenden Stützelements (16) bzw. der betreffenden Stützelementgruppe variierbar ist.

6. Durchbiegungseinstellwalze nach einem der vorhergehenden Ansprüche,
**dadurch gekennzeichnet,**
**dass** die Temperaturbeeinflussungseinrichtung (26) Düsen (32) umfasst, über die das betreffende Fluid in die jeweiligen Walzenzonen einspritzbar ist.

7. Durchbiegungseinstellwalze nach Anspruch 6,
**dadurch gekennzeichnet,**
**dass** den Düsen (32) jeweils ein Ventil (34) vorgeschaltet ist, über das die jeweilige Fluidmenge in Abhängigkeit vom jeweiligen Kolbendruck steuerbar ist.

8. Durchbiegungseinstellwalze nach Anspruch 7,
**dadurch gekennzeichnet,**
**dass** das Ventil (34) so ausgeführt ist, dass es mit zunehmend höher werdenden Kolbendrücken zunehmend schließt und umgekehrt.

9. Durchbiegungseinstellwalze nach Anspruch 7 oder 8,
**dadurch gekennzeichnet,**
**dass** das Ventil (34) so ausgeführt und/oder ansteuerbar ist, dass es bei Kolbendrücken oberhalb eines vorgebbaren oberen Grenzwertes zumindest im wesentlichen ganz geschlossen und/oder bei Kolbendrücken unterhalb einem vorgebbaren unteren Grenzwert zumindest im wesentlichen ganz geöffnet ist.

10. Durchbiegungseinstellwalze nach einem der Ansprüche 7 bis 9,
**dadurch gekennzeichnet,**
**dass** der Ventilquerschnitt über einen federbelasteten Ventilkörper (36) variierbar ist, der entgegen der Federkraft (38) durch den Kolbendruck beaufschlagbar ist.

11. Durchbiegungseinstellwalze nach einem der Ansprüche 6 bis 10,
**dadurch gekennzeichnet,**
**dass** der Düsenquerschnitt an die Stützelementgröße angepasst ist, um insbesondere eine konstante Mischtemperatur im Walzeninnern zu erzeugen.

12. Durchbiegungseinstellwalze nach einem der vorhergehenden Ansprüche,
**dadurch gekennzeichnet,**
**dass** die Breite des Steges (48), der den den Taschenbereich des jeweiligen hydrostatischen Stützelements (16) umschließenden Ringraum (46) nach außen begrenzt, kleiner ist als die Breite des zwischen dem Ringraum (46) und dem Taschenbereich vorgesehenen Steges (52).

13. Durchbiegungseinstellwalze nach einem der vorhergehenden Ansprüche,
**dadurch gekennzeichnet,**
**dass** als Druckfluid und/oder als der getrennten Temperaturbeeinflussung dienendes Fluid jeweils Öl vorgesehen ist.

## Claims

1. A deflection controlled roll (10) comprising a rotating roll jacket (12), a rotationally fixed yoke (14) axially passing through the roll jacket (12), a plurality of hydrostatic support elements (16) which are arranged in series on the yoke in the direction of the roll axis (X) and which are each formed by a piston in cylinder unit actuated by pressure fluid, have a hydrostatic pocket region on their side facing the inner side of the roll jacket and exert a supporting force on the inner side of the roll jacket (12), and a device (26) for influencing the roll temperature via at least one fluid flow (28) separate from the pressure fluid loading of the support elements (16), with the support elements (16) being controllable individually and/or group-wise, whereby corresponding sequential roll zones result in the direction of the roll axis, and wherein a respective local loading of the different roll zones takes place by the temperature influencing device (26) in dependence on the piston pressure of the support element (16) or of the support element group of the respective roll zone, **characterized in that** the fluid delivered by the temperature influencing device (26) is supplied to an annular space (46) surrounding the pocket region of the respective hydrostatic support element

2. A deflection controlled roll in accordance with claim 1, **characterized in that** the annular spaces (30) of the different roll zones provided between the roll jacket (12) and the yoke (14) can be loaded with the respective fluid by means of the temperature influencing device (26) in a region disposed, considered in each case in the direction of roll rotation, outside the respective support element (16) or the respective support element group.

3. A deflection controlled roll in accordance with claim 1 or claim 2, **characterized in that** at least some of the roll zones can be respectively loaded with a cooling fluid by means of the temperature influencing device (26).

4. A deflection controlled roll in accordance with any one of the preceding claims, **characterized in that** at least some of the roll zones can be respectively loaded with a heating fluid by means of the temperature influencing device (26).

5. A deflection controlled roll in accordance with any one of the preceding claims, **characterized in that** the fluid amount supplied locally to a respective roll zone by means of the temperature influencing device (26) can be varied in dependence on the piston pressure of the relevant support element (16) or of the relevant support element group.

6. A deflection controlled roll in accordance with any one of the preceding claims, **characterized in that** the temperature influencing device (26) includes nozzles (32) via which the relevant fluid can be injected into the respective roll zones.

7. A deflection controlled roll in accordance with claim 6, **characterized in that** a respective valve (34) is disposed before each of the nozzles (32) and the respective fluid amount is controllable by it in dependence on the respective piston pressure.

8. A deflection controlled roll in accordance with claim 7, **characterized in that** the valve (34) is designed such that it increasingly closes as piston pressures become increasingly higher and vice versa.

9. A deflection controlled roll in accordance with claim 7 or claim 8, **characterized in that** the valve (34) is designed and/or is controllable such that it is at least substantially fully closed at piston pressures above a pre-settable upper limiting value and/or is at least substantially fully open at piston pressures below a pre-settable lower limiting value.

10. A deflection controlled roll in accordance with any one of the claims 7 to 9, **characterized in that** the valve cross-section can be varied via a spring-loaded valve body (36) which can be loaded against the spring force (38) by the piston pressure.

11. A deflection controlled roll in accordance with any one of the claims 6 to 10, **characterized in that** the nozzle cross-section is matched to the support element size in order to in particular produce a constant mixed temperature at the interior of the roll.

12. A deflection controlled roll in accordance with any one of the preceding claims, **characterized in that** the width of the web (48) outwardly bounding the annular space (46) surrounding the pocket region of the respective hydrostatic support element (16) is smaller than the width of the web (52) provided between the annular space (46) and the pocket region.

13. A deflection controlled roll in accordance with any one of the preceding claims, **characterized in that** oil is in each case provided as the pressure fluid and/or as the fluid serving for the separate temperature influencing.

## Revendications

1. Cylindre à réglage de flexion (10) comportant un bandage de cylindre (12) périphérique, une armature (14) solidaire en rotation traversant axialement le bandage de cylindre (12), plusieurs éléments de soutien (16) hydrostatiques agencées les uns derrière les autres sur l'armature en direction de l'axe de cylindre (X), qui sont chacun formés par une unité à piston-et-cylindre actionnée par fluide sous pression, qui présentent sur leur face tournée vers la face intérieure du bandage de cylindre (12) une zone de poches hydrostatiques et qui exercent une force de soutien sur la face intérieure du bandage de cylindre (12), et comportant un dispositif (26) permettant d'influencer la température du cylindre via au moins un courant fluidique (28) séparé de l'alimentation des éléments de soutien (16) en fluide sous pression, les éléments de soutien (16) pouvant être pilotés individuellement et/ou par groupes, dont il résulte des zones de cylindre correspondantes se succédant en direction de l'axe de cylindre, et une sollicitation locale respective des différentes zones de cylindre par le système d'influence de température (26) ayant lieu en fonction de la pression de piston de l'élément de soutien (16) ou du groupe d'éléments de soutien de la zone de cylindre respective,
**caractérisé en ce que**
le fluide fourni par le système d'influence de température (26) est amené à un espace annulaire (46) entourant la région de poche de l'élément de soutien hydrostatique respectif.

2. Cylindre à réglage de flexion selon la revendication 1, **caractérisé en ce qu'**au moyen du système d'influence de température (26), les espaces annulaires (30), prévus entre le bandage de cylindre (12) et l'armature (14), des différentes zones de cylindre peuvent être alimentés chacun avec le fluide concerné dans une zone qui, vue en direction de rotation du cylindre, est située en dehors de l'élément de soutien (16) concerné ou du groupe d'éléments de soutien concernés.

3. Cylindre à réglage de flexion selon la revendication 1 ou 2, **caractérisé en ce qu'**au moins une partie des zones de cylindre peut être respectivement alimentée avec un fluide de refroidissement au moyen du système d'influence de température (26).

4. Cylindre à réglage de flexion selon l'une des revendications précédentes, **caractérisé en ce qu'**au moins une partie des zones de cylindre peut être respectivement alimentée avec un fluide de chauffage au moyen du système d'influence de température (26).

5. Cylindre à réglage de flexion selon l'une des revendications précédentes, **caractérisé en ce que** la quantité de fluide amenée localement à une zone de cylindre respective au moyen du système d'influence de température (26) est variable en fonction de la pression de piston de l'élément de soutien (16) concerné ou du groupe d'éléments de soutien concernés.

6. Cylindre à réglage de flexion selon l'une des revendications précédentes, **caractérisé en ce que** le système d'influence de température (26) comprend des buses (32) via lesquelles le fluide concerné peut être injecté dans les zones de cylindre respectives.

7. Cylindre à réglage de flexion selon la revendication 6, **caractérisé en ce qu'**en amont des buses (32) est montée une soupape (34) respective via laquelle la quantité de fluide respective peut être commandée en fonction de la pression de piston respective.

8. Cylindre à réglage de flexion selon la revendication 7, **caractérisé en ce que** la soupape (34) est réalisée de telle sorte qu'avec des pressions de cylindre de plus en plus élevées, elle ferme de plus en plus et inversement.

9. Cylindre à réglage de flexion selon la revendication 7 ou 8, **caractérisé en ce que** la soupape (34) est réalisée et/ou pilotable de telle sorte qu'en cas de pressions de piston supérieures à une valeur seuil supérieure prédéterminable, elle est au moins sensiblement totalement fermée et/ou en cas de pressions inférieures à une valeur seuil inférieure prédéterminable, elle est au moins sensiblement totalement ouverte.

10. Cylindre à réglage de flexion selon l'une des revendications 7 à 9, **caractérisé en ce que** la section transversale de soupape peut varier via un corps de soupape (36) sollicité par ressort qui peut être sollicité par la pression de piston à l'encontre de la force de ressort (38).

11. Cylindre à réglage de flexion selon l'une des revendications 6 à 10, **caractérisé en ce que** la section transversale de buse est adaptée à la taille de l'élément de soutien pour engendrer en particulier une température de mélange constante à l'intérieur du cylindre.

12. Cylindre à réglage de flexion selon l'une des revendications précédentes, **caractérisé en ce que** la largeur de la nervure (48) qui délimite vers l'extérieur l'espace annulaire (46) entourant la région de poche de l'élément de soutien (16) hydrostatique respectif est plus petite que la largeur de la nervure (52) prévue entre l'espace annulaire (46) et la région de poche.

13. Cylindre à réglage de flexion selon l'une des revendications précédentes, **caractérisé en ce que** de l'huile est prévue à titre de fluide de pression et/ou à titre de fluide servant à l'influence de température séparée.
